# FASCICULE DE BREVET EUROPEEN

(11) **EP 4 148 755 B1**
(45) Date de publication et mention de la délivrance du brevet: **03.07.2024**
(21) Numéro de dépôt: 22193461.5
(22) Date de dépôt: 01.09.2022
(51) Int. Cl.: H01G 11/02, H01G 11/06, H01G 11/14, H01G 11/62, H01G 11/84, H01G 11/32, H01G 11/60, H01G 11/04

(54) **PROCÉDÉ DE FORMATION D'UN SUPERCONDENSATEUR HYBRIDE AU POTASSIUM**
VERFAHREN ZUR BILDUNG EINES HYBRIDEN KALIUM-SUPERKONDENSATORS
METHOD FOR FORMING A POTASSIUM HYBRID SUPERCAPACITOR

(30) Priorité: 13.09.2021 FR 2109574
(43) Date de publication de la demande: 15.03.2023
(73) Titulaire: Commissariat à l'énergie atomique et aux énergies alternatives, 75015 Paris (FR)
(72) Inventeur: YVENAT, Marie-Eve, 38054 Grenoble cedex 09 (FR); AZAIS, Philippe, 38054 Grenoble cedex 09 (FR); CHAVILLON, Benoît, 38054 Grenoble cedex 09 (FR); MAYOUSSE, Eric, 38054 Grenoble cedex 09 (FR); PERDU, Fabien, 38054 Grenoble cedex 09 (FR)
(74) Mandataire: Cabinet Nony

(56) Documents cités:
- EP-A1- 3 534 443
- EP-A1- 3 848 949
- WO-A1-2016/168496
- WO-A1-2018/135627
- CN-A- 111 584 248
- JP-A- 2020 145 061
- US-A- 6 087 043
- US-A1- 2012 115 035

## Description

### Domaine technique

La présente invention concerne un procédé de formation d'un supercondensateur hybride au potassium.

### Technique antérieure

Les supercondensateurs constituent des dispositifs à stockage d'énergie fournissant une densité de puissance et une densité d'énergie intermédiaires entre celles fournies par des batteries électrochimiques et par des condensateurs électrolytiques classiques. En outre, ils restituent plus rapidement de l'énergie qu'une batterie électrochimique.

Il est connu des supercondensateurs symétriques, dont les électrodes positive et négative sont à base de carbone activé et l'électrolyte est à base de tétraéthylammonium tétrafluoroborate (TEABF₄). Ces supercondensateurs symétriques présentent une forte densité de puissance, une cyclabilité élevée mais une densité d'énergie faible liée à la capacité moyenne du supercondensateur (celle-ci étant de l'ordre de 8 Wh/kg) et à la tension de fonctionnement.

En vue de répondre à la demande d'accroissement de la densité d'énergie, des supercondensateurs ont été développés se situant entre les supercondensateurs symétriques classiquement utilisés à base de carbone activé et les batteries. De tels condensateurs sont dits asymétriques ou hybrides. Une des électrodes, classiquement, l'électrode négative, est spécifiquement constituée à partir d'un matériau de batterie rechargeable et l'autre, classiquement l'électrode positive, est constituée à base de carbone activé, l'électrolyte situé entre ces deux électrodes étant classiquement aqueux et comportant généralement des sels de lithium en solution.

Le stockage de charges dans un supercondensateur hybride se produit au niveau de l'électrode négative par le biais d'une réaction redox, tandis que le stockage de charges au niveau de l'électrode positive se produit par le biais de la formation d'une double-couche électrochimique.

La demande FR 3 005 199 A1 décrit un exemple de supercondensateur hybride dit au potassium, comportant une électrode négative comportant du graphite, une électrode positive comportant du carbone activé et un électrolyte comportant au moins un sel de potassium.

WO 2018/135627 A1 divulgue un procédé de formation d'un supercondensateur hybride au potassium.

Les premiers cycles d'utilisation, appelés « formation », d'un système électrochimique tel qu'un supercondensateur hybride, sont essentiels pour assurer son bon fonctionnement à long terme.

La formation de référence, correspondant à 5 cycles de charge/décharge à Cₓ ou 5C_{y} (Cₓ et C_{y} étant respectivement la capacité de formation du composé d'intercalation KC₈ et la capacité de la cellule) de 0,5 à 3,5 V, utilisée jusqu'ici donne lieu à une dispersion et une instabilité des performances en cyclage, avec des capacités déchargées qui diminuent puis augmentent drastiquement en quelques milliers de cycles pour atteindre des valeurs très supérieures aux supercondensateurs symétriques.

Les demandes WO 2016/168496 A1, WO 2016/059907 A1, CN 106797022 A, US 2018/254524 A1 et DE 10 2018 105613 A1 décrivent des formulations d'électrodes et de compositions d'électrolytes pour des systèmes fonctionnels à base de potassium, tels que des batteries potassium-ion, condensateurs voire supercondensateurs hybrides au potassium, sans préciser toutefois d'étape de formation des électrodes.

La demande WO 2020/125560 A1 décrit une étape de pré-potassiation comportant la mise en oeuvre de potassium métal pour réaliser une couche de passivation en potassium à la surface de l'électrode négative comportant du graphite.

### Exposé de l'invention

Il existe donc un besoin pour améliorer la stabilité et la reproductibilité des performances en cyclage des supercondensateurs au potassium, qui soit simple et peu coûteux à mettre en oeuvre.

### Résumé de l'invention

L'invention a ainsi pour objet un procédé de formation d'un supercondensateur hybride au potassium, le procédé comportant :
a) la fourniture du supercondensateur hybride au potassium comportant :
   - une électrode négative comportant du graphite,
   - une électrode positive comportant du carbone activé,
   - un électrolyte comportant au moins un sel de potassium,
b) une charge à courant constant du supercondensateur à un régime compris entre Cₓ/50 et Cₓ/2 ou entre C_{y}/10 et 2,5C_{y}, jusqu'à une tension de coupure de charge comprise entre 3,0 V et 3,3 V, Cₓ étant la capacité de formation du composé d'intercalation KC₈ et C_{y} la capacité de la cellule électrolytique,
c) un maintien du supercondensateur à la tension de coupure de charge jusqu'à ce que le courant de fuite soit compris entre Cₓ/2000 et Cₓ/500,
d) une décharge du supercondensateur à courant constant à un régime compris entre Cₓ/50 et Cₓ ou entre C_{y}/10 et 5C_{y}, jusqu'à une tension de coupure de décharge comprise entre 0 V et 2 V, de préférence égale à 0,5 V,
le procédé comportant en outre un dégazage du supercondensateur après l'une des étapes b) à d).

Le maintien sous tension continue d'un supercondensateur est habituellement utilisé pour le maintenir à l'état chargé en compensant les phénomènes d'autodécharge et donc pour simuler son vieillissement et observer la chute de ses performances en cyclage. De façon surprenante et contre toute attente, les inventeurs ont constaté que le maintien sous tension continue du supercondensateur au moyen du procédé selon l'invention permet d'obtenir des performances en cyclage reproductibles et stables, notamment à long terme, avec des densités d'énergie élevées, notamment supérieures à 12 Wh/kg_{cœur électrochimique}.

Le procédé selon l'invention est par ailleurs à bas coût et de mise en oeuvre aisée, avec un nombre d'étapes limité. De plus, il ne nécessite pas d'étape complexe de pré-potassiation telle que décrite dans la technique antérieure.

L'électrode positive est le siège de la formation de la double-couche électrochimique. L'électrode négative est le siège d'une réaction redox impliquant une intercalation du potassium présent dans l'électrolyte. Par exemple, l'intercalation peut se produire pour que la composition en potassium soit au plus égale à KC₈, par exemple, allant de KC₆₄ à KC₈ et avantageusement correspondant à KC₄₈ ou à KC₁₆.

La capacité de formation du composé d'intercalation KCs, dénommée Cₓ, est égale à 5 fois la capacité de la cellule électrolytique C_{y}, La cellule électrolytique comporte l'électrode négative, l'électrode positive et l'électrolyte.

La tension du supercondensateur hybride au potassium de l'étape a) peut être comprise entre 50 mV et 500 mV, de préférence entre 100 mV et 300 mV.

De préférence, la tension de coupure de charge de l'étape b) est comprise entre 3,1 V et 3,3 V, étant par exemple de 3,2 V.

De préférence, la durée de l'étape c) de maintien du supercondensateur à la tension de coupure de charge est comprise entre 22 heures et 26 heures, par exemple est de 24 heures.

Au moins une, de préférence toutes les étapes b) à d), peuvent être mises en oeuvre à une température comprise entre 15 °C et 30 °C, de préférence comprise entre 20 °C et 25 °C, mieux comprise entre 21 °C et 24 °C, par exemple à une température de 23 °C. Il est ainsi possible de mettre en oeuvre le procédé selon l'invention sans étape de chauffage du supercondensateur hybride au potassium.

La charge à l'étape b) peut être effectuée à un régime compris entre Cₓ/15 et Cₓ/5 ou entre C_{y}/3 et C_{y}, de préférence à un régime Cₓ/10 ou C_{y}/2.

La décharge à l'étape d) peut être effectuée à un régime compris entre Cₓ/15 et Cₓ/5 ou entre C_{y}/3 et C_{y}, de préférence à un régime Cₓ/10 ou C_{y}/2.

La durée de maintien à l'étape c) peut être comprise entre 15 heures et 30 heures, voire comprise entre 20 heures et 28 heures, notamment de 24 heures.

Le courant de fuite en fin d'étape c) peut être compris entre Cₓ/2000 et Cₓ/500 ou entre C_{y}/400et C_{y}/100, de préférence est égal à Cₓ/1000 ou C_{y}/200.

### Dégazage

Le dégazage consiste en l'élimination de tout ou partie du ou des gaz présents au sein du supercondensateur hybride au potassium. Ce ou ces gaz peuvent avoir été produits à l'étape b), c) et/ou d). Il peut s'agir de produits de réactions électrochimiques liés à la formation d'une couche de passivation à l'électrode négative et/ou à des réactions parasites entre l'électrolyte et les groupes fonctionnels de l'électrode positive.

L'étape de dégazage limite le vieillissement prématuré du supercondensateur. Elle permet d'éviter notamment que des pores de l'électrodes ne soient remplis de gaz et deviennent non fonctionnels, ce qui résulterait en une chute des performances brutales du supercondensateur.

Le dégazage du supercondensateur peut être effectué après chacune des étapes b) à d).

Notamment, le dégazage du supercondensateur peut être effectué après l'étape d).

### Electrode positive

De préférence, l'électrode positive est une électrode capacitive.

De préférence, l'électrode positive est poreuse.

### Electrode négative

De préférence, le graphite de l'électrode négative est apte à intercaler le potassium. Il peut s'agir en particulier de graphite particulaire, dont la taille médiane de particules est de 50 µm cette taille de particules étant mesurée par granulométrie laser D50.

Le potassium a ainsi la capacité de s'intercaler dans le graphite de l'électrode négative, à des stades élevés de charge, de sorte que la composition corresponde au plus à KC₈.

### Electrolyte

De préférence, l'électrolyte est non aqueux.

Le au moins un sel de potassium présent dans l'électrolyte peut être en solution dans au moins un solvant organique.

Le au moins un sel de potassium peut être choisi parmi KClO₄, KBF₄, KPF₆, le bis(trifluorométhanesulfonyl)imide de potassium (connu sous l'abréviation KTFSI), le bis(fluorosulfonyl)imide de potassium (connu sous l'abréviation KFSI), le bis(oxalato)borate de potassium (connu sous l'abréviation KBOB), KSCN, KSbF₆, KAsF₆, KAlCl₄, KSiF₆, KSO₃CF₃ et les mélanges de ceux-ci, de préférence choisi parmi KClO₄, KBF₄, KPF₆ et les mélanges de ceux-ci.

Le au moins un sel de potassium présent dans l'électrolyte peut être en solution dans au moins un solvant choisi parmi les solvants carbonates, les solvants éthers linéaires, les solvants nitriles, les solvants lactones, les solvants amides et les mélanges de ceux-ci, de préférence choisi parmi le carbonate de propylène, le carbonate d'éthylène, le diéthylcarbonate, le diméthylcarbonate, le diméthoxyéthane, l'acétonitrile, la γ-butyrolactone, le diméthylformamide et les mélanges de ceux-ci.

### Brève description des dessins

L'invention pourra être mieux comprise à la lecture de la description détaillée qui va suivre, d'exemples de mise en oeuvre non limitatifs de celle-ci, et à l'examen du dessin annexé, sur lequel :
[Fig 1] la figure 1 représente des résultats de performances en cyclage d'un supercondensateur hybride au potassium ayant été soumis à un procédé de formation hors invention,
[Fig 2] la figure 2 représente des résultats de performances en cyclage d'un supercondensateur hybride au potassium ayant été soumis à un autre procédé de formation hors invention,
[Fig 3] la figure 3 représente des résultats de performances en cyclage d'un supercondensateur hybride au potassium ayant été soumis à un procédé de formation selon l'invention, et
[Fig 4] la figure 4 représente des résultats d'essais comparatifs évaluant l'influence de chaque étape du procédé selon l'invention.

### Description détaillée

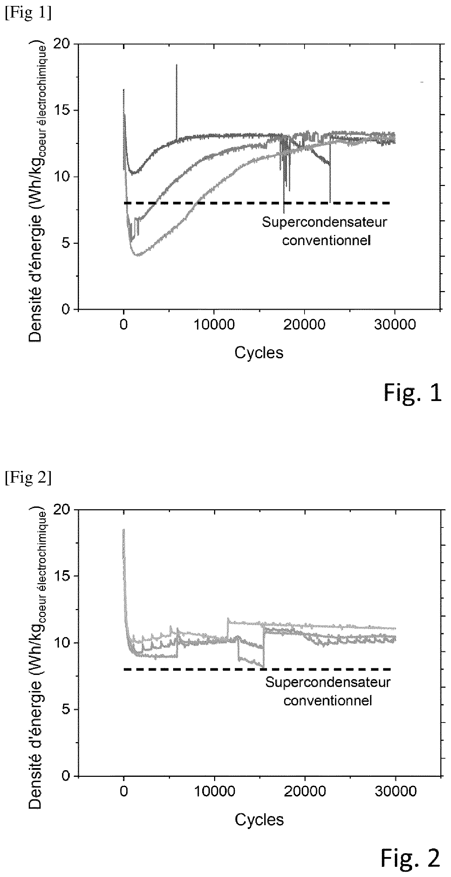

On a représenté aux figures 1 à 4 des résultats de performances en cyclage d'un supercondensateur hybride au potassium ayant été soumis à un procédé de formation hors ou selon invention. Les courbes représentent la densité d'énergie mesurée en fonction du nombre de cycles. Dans ces essais, le cyclage est réalisé à un régime de 20Cₓ ou 100C_{y}.

On a représenté à la figure 1 les résultats de performances en cyclage de trois supercondensateurs hybrides au potassium ayant été soumis à un même procédé de formation de référence hors invention.

Dans ces essais, le procédé de formation de référence utilisé correspond à cinq cycles de charge/décharge à Cₓ ou 5C_{y} de 0,5 à 3,5 V.

On voit sur la figure 1 que les trois courbes donnent lieu à une dispersion et une instabilité des performances en cyclage, avec des densités d'énergie qui diminuent puis augmentent drastiquement en quelques milliers de cycles pour atteindre des valeurs de densité d'énergie comprises entre 12 et 13 Wh/kg_{cœur électrochimique}, c'est-à-dire très supérieures aux valeurs obtenues avec les supercondensateurs symétriques, encore appelés conventionnels, qui sont de l'ordre de 8 Wh/kg_{cœur électrochimique}.

On a représenté à la figure 2 des résultats de performances en cyclage de trois supercondensateurs hybrides au potassium ayant été soumis à un même procédé de formation hors invention constitué de premiers cycles réalisés à un régime Cₓ/10 ou C_{y}/2 et à une température d'environ 23 °C.

On voit sur la figure 2 que les courbes sont reproductibles et donc que la dispersion observée à la figure 1 est significativement diminuée. Cependant, les valeurs de densité d'énergie qui sont comprises entre 10 et 11 Wh/kg_{cœur électrochimique} sont inférieures aux valeurs obtenues à la figure 1. Par ailleurs, les performances en cyclage à long terme du supercondensateur demeurent instables.

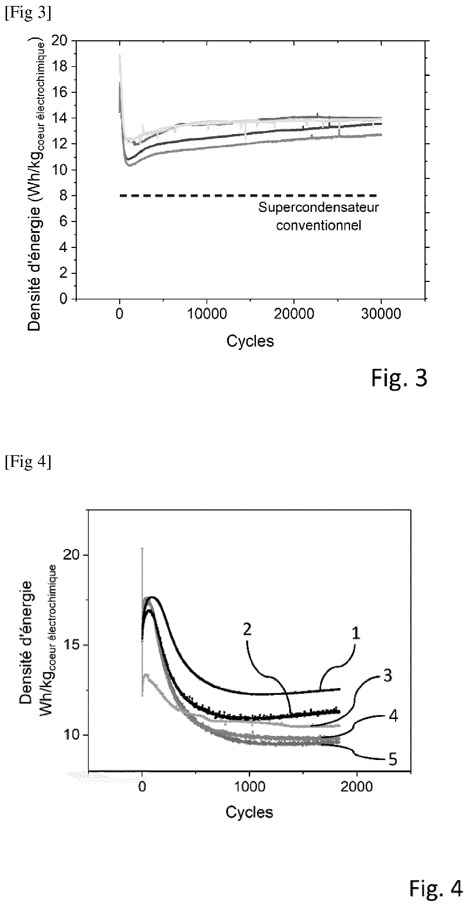

On a représenté à la figure 3 des résultats de performances en cyclage de quatre supercondensateurs hybrides au potassium ayant été soumis à un même exemple de mise en oeuvre du procédé de formation selon l'invention.

Dans ces essais, l'exemple de mise en oeuvre du procédé de formation selon l'invention utilisé comprend la succession :
- d'une charge à courant constant du supercondensateur à un régime de Cₓ/10 ou C_{y}/2 jusqu'à une tension de coupure de charge de 3,2 V,
- d'un maintien du supercondensateur à la tension de coupure de charge de 3,2 V pendant une durée de maintien de 24 heures,
- d'une décharge du supercondensateur jusqu'à une tension de coupure de décharge de 0,5 V, et
- d'un dégazage du supercondensateur.

On voit sur la figure 3 que les courbes sont à la fois reproductibles et stables, avec des valeurs de densité d'énergie élevées, comprises entre 12 et 14 Wh/kg_{cœur électrochimique}.

On a représenté à la figure 4 des résultats d'essais comparatifs évaluant l'influence de chaque étape du procédé selon l'invention.

La légende de la figure 4 est la suivante.

La courbe 1 correspond à un exemple de mise en oeuvre du procédé selon l'invention.

La courbe 2 correspond à un exemple de mise en oeuvre du procédé selon l'invention sans l'étape b).

La courbe 3 correspond à un exemple de mise en oeuvre du procédé selon l'invention sans le dégazage.

La courbe 4 correspond à un exemple de mise en oeuvre du procédé selon l'invention sans l'étape b) qui est remplacée par une étape de charge à courant constant du supercondensateur à un régime supérieur à Cₓ/2 (5 mA), jusqu'à une tension de coupure de charge comprise entre 3,0 V et 3,3 V.

La courbe 5 correspond à un exemple de mise en oeuvre du procédé selon l'invention sans l'étape c) qui est remplacée par une étape de maintien du supercondensateur à la tension de coupure de charge jusqu'à ce que le courant de fuite soit égal à 10 µA.

On voit sur la figure 4 que les meilleures performances en cyclage, en termes de densité d'énergie, de stabilité et de reproductibilité, sont obtenues avec la courbe 1 qui correspond à un exemple de mise en oeuvre du procédé de formation selon l'invention. En effet, les essais montrent que les valeurs de densité d'énergie pour les courbes 2 à 5 ne dépassent pas sur le long terme 12 Wh/kg_{cœur électrochimique}.

Bien évidemment, l'invention n'est pas limitée à l'exemple de mise en oeuvre du procédé présenté à titre illustratif et non limitatif.

## Revendications

1. Procédé de formation d'un supercondensateur hybride au potassium, le procédé comportant :
a) la fourniture du supercondensateur hybride au potassium comportant :
- une électrode négative comportant du graphite,
- une électrode positive comportant du carbone activé,
- un électrolyte comportant au moins un sel de potassium,
b) une charge à courant constant du supercondensateur à un régime compris entre Cₓ/50 et Cₓ/2, jusqu'à une tension de coupure de charge comprise entre 3,0 V et 3,3 V, Cₓ étant la capacité de formation du composé d'intercalation KCs,
c) un maintien du supercondensateur à la tension de coupure de charge jusqu'à ce que le courant de fuite soit compris entre Cₓ/2000 et Cₓ/500,
d) une décharge du supercondensateur à courant constant à un régime compris entre Cₓ/50 et Cₓ, jusqu'à une tension de coupure de décharge comprise entre 0 V et 2 V,
le procédé comportant en outre un dégazage du supercondensateur après l'une des étapes b) à d).

2. Procédé selon la revendication 1, au moins une, de préférence toutes les étapes b) à d), étant mises en oeuvre à une température comprise entre 15 °C et 30 °C, de préférence comprise entre 20 °C et 25 °C.

3. Procédé selon l'une quelconque des revendications 1 et 2, la charge à l'étape b) et la décharge à l'étape d) étant effectuées à un régime compris entre Cₓ/15 et Cₓ/5, de préférence à un régime Cₓ/10.

4. Procédé selon l'une quelconque des revendications précédentes, la durée de maintien à l'étape c) étant comprise entre 20 heures et 28 heures, étant notamment de 24 heures.

5. Procédé selon l'une quelconque des revendications précédentes, le courant de fuite en fin d'étape c) étant égal à Cₓ/1000.

6. Procédé selon l'une quelconque des revendications précédentes, le dégazage du supercondensateur étant effectué après l'étape d).

7. Procédé selon l'une quelconque des revendications précédentes, l'électrolyte étant non aqueux.

8. Procédé selon l'une quelconque des revendications précédentes, dans lequel le au moins un sel de potassium présent dans l'électrolyte est en solution dans au moins un solvant organique.

9. Procédé selon l'une quelconque des revendications précédentes, dans lequel le au moins un sel de potassium présent dans l'électrolyte est choisi parmi KClO₄, KBF₄, KPF₆, le bis(trifluorométhanesulfonyl)imide de potassium, le bis(fluorosulfonyl)imide de potassium, le bis(oxalato)borate de potassium, KSCN, KSbF₆, KAsF₆, KAlCl₄, KSiF₆, KSO₃CF₃ et les mélanges de ceux-ci, de préférence choisi parmi KClO₄, KBF₄, KPF₆ et les mélanges de ceux-ci.

10. Procédé selon la revendication précédente, dans lequel le au moins un sel de potassium est en solution dans au moins un solvant choisi parmi les solvants carbonates, les solvants éthers linéaires, les solvants nitriles, les solvants lactones, les solvants amides et les mélanges de ceux-ci, de préférence choisi parmi le carbonate de propylène, le carbonate d'éthylène, le diéthylcarbonate, le diméthylcarbonate, le diméthoxyéthane, l'acétonitrile, la γ-butyrolactone, le diméthylformamide et les mélanges de ceux-ci.

## Patentansprüche

1. Verfahren zur Bildung eines Kalium-Hybrid-Superkondensators, wobei das Verfahren Folgendes umfasst:
a) die Bereitstellung des Kalium-Hybrid-Superkondensators, der Folgendes umfasst:
- eine negative Elektrode, die Graphit umfasst,
- eine positive Elektrode, die Aktivkohle umfasst,
- einen Elektrolyten, der mindestens ein Kaliumsalz umfasst,
b) ein Laden des Superkondensators bei konstantem Strom unter Bedingungen zwischen Cₓ/50 und Cₓ/2 bis zu einer Ladeschlussspannung zwischen 3,0 V und 3,3 V, wobei es sich bei Cₓ um das Vermögen zur Bildung der Interkalationsverbindung KC₈ handelt,
c) ein Halten des Superkondensators auf der Ladeschlussspannung, bis der Leckstrom zwischen Cₓ/2000 und Cₓ/500 beträgt,
d) ein Entladen des Superkondensators mit konstantem Strom unter Bedingungen zwischen Cₓ/50 und Cₓ bis zu einer Entladeschlussspannung zwischen 0 V und 2 V,
wobei das Verfahren weiterhin ein Entgasen des Superkondensators nach einem der Schritte b) bis d) umfasst.

2. Verfahren nach Anspruch 1, wobei mindestens einer, vorzugsweise alle der Schritte b) bis d) bei einer Temperatur zwischen 15 °C und 30 °C, vorzugsweise zwischen 20 °C und 25 °C, durchgeführt wird bzw. werden.

3. Verfahren nach einem der Ansprüche 1 und 2, wobei das Laden in Schritt b) und das Entladen in Schritt d) unter Bedingungen zwischen Cₓ/15 und Cₓ/5, vorzugsweise unter Bedingungen von Cₓ/10, durchgeführt werden.

4. Verfahren nach einem der vorhergehenden Ansprüche, wobei die Haltezeit in Schritt c) zwischen 20 Stunden und 28 Stunden beträgt, wobei sie insbesondere 24 Stunden beträgt.

5. Verfahren nach einem der vorhergehenden Ansprüche, wobei der Leckstrom am Ende von Schritt c) gleich Cₓ/1000 ist.

6. Verfahren nach einem der vorhergehenden Ansprüche, wobei das Entgasen des Superkondensators nach Schritt d) erfolgt.

7. Verfahren nach einem der vorhergehenden Ansprüche, wobei der Elektrolyt nichtwässrig ist.

8. Verfahren nach einem der vorhergehenden Ansprüche, wobei das im Elektrolyten vorhandene mindestens eine Kaliumsalz in Lösung in mindestens einem organischen Lösungsmittel vorliegt.

9. Verfahren nach einem der vorhergehenden Ansprüche, wobei das mindestens eine im Elektrolyten vorhandene Kaliumsalz aus KClO₄, KBF₄, KPF₆, Kaliumbis (trifluormethansulfonyl)imid, Kaliumbis(fluorsulfonyl)imid, Kaliumbis(oxalato)borat, KSCN, KSbF₆, KAsF₆, KAlCl₄, KSiF₆, KSO₃CF₃ und Mischungen davon ausgewählt ist, vorzugsweise aus KClO₄, KBF₄, KPF₆ und Mischungen davon ausgewählt ist.

10. Verfahren nach dem vorhergehenden Anspruch, wobei das mindestens eine Kaliumsalz in Lösung in mindestens einem Lösungsmittel vorliegt, das aus Carbonat-Lösungsmitteln, linearen Ether-Lösungsmitteln, Nitril-Lösungsmitteln, Lacton-Lösungsmitteln, Amid-Lösungsmitteln und Mischungen davon ausgewählt ist, vorzugsweise aus Propylencarbonat, Ethylencarbonat, Diethylcarbonat, Dimethylcarbonat, Dimethoxyethan, Acetonitril, γ-Butyrolacton, Dimethylformamid und Mischungen davon ausgewählt ist.

## Claims

1. Formation process for a potassium-ion hybrid supercapacitor, the process comprising:
a) supplying the potassium-ion hybrid supercapacitor comprising:
- a negative electrode comprising graphite,
- a positive electrode comprising activated carbon,
- an electrolyte comprising at least one potassium salt,
b) charging the supercapacitor at constant current in a protocol of between Cₓ/50 and Cₓ/2, to a charge cutoff voltage of between 3.0 V and 3.3 V, where Cₓ is the formation capacity of the intercalation compound KC₈,
c) holding the supercapacitor at the charge cutoff voltage until the leakage current is between Cₓ/2000 and Cₓ/500,
d) discharging the supercapacitor at constant current in a protocol of between Cₓ/50 and Cₓ, to a discharge cutoff voltage of between 0 V and 2 V,
where the process further comprises degassing the supercapacitor after one of steps b) to d).

2. Process according to Claim 1, where at least one and preferably all of steps b) to d) are implemented at a temperature of between 15°C and 30°C, preferably of between 20°C and 25°C.

3. Process according to either one of Claims 1 and 2, where the charging in step b) and the discharging in step d) are carried out in a protocol of between Cₓ/15 and Cₓ/5, preferably in a Cₓ/10 protocol.

4. Process according to any one of the preceding claims, where the hold time in step c) is between 20 hours and 28 hours, and in particular is 24 hours.

5. Process according to any one of the preceding claims, where the leakage current at the end of step c) is equal to Cₓ/1000.

6. Process according to any one of the preceding claims, where the degassing of the supercapacitor is carried out after step d).

7. Process according to any one of the preceding claims, where the electrolyte is non-aqueous.

8. Process according to any one of the preceding claims, wherein the at least one potassium salt present in the electrolyte is in solution in at least one organic solvent.

9. Process according to any one of the preceding claims, wherein the at least one potassium salt present in the electrolyte is selected from KClO₄, KBF₄, KPF₆, potassium bis(trifluoromethanesulfonyl)imide, potassium bis(fluorosulfonyl)imide, potassium bis(oxalato)borate, KSCN, KSbF₆, KAsF₆, KAlCl₄, KSiF₆, KSO₃CF₃ and mixtures thereof, and preferably selected from KClO₄, KBF₄, KPF₆ and mixtures thereof.

10. Process according to the preceding claim, wherein the at least one potassium salt is in solution in at least one solvent selected from carbonate solvents, linear ether solvents, nitrile solvents, lactone solvents, amide solvents and mixtures thereof, and preferably selected from propylene carbonate, ethylene carbonate, diethyl carbonate, dimethyl carbonate, dimethoxyethane, acetonitrile, γ-butyrolactone, dimethylformamide and mixtures thereof.
